# EUROPÄISCHE PATENTSCHRIFT

(11) **EP 3 166 370 B1**
(45) Veröffentlichungstag und Bekanntmachung des Hinweises auf die Patenterteilung: **12.06.2019**
(21) Anmeldenummer: 16196838.3
(22) Anmeldetag: 02.11.2016
(51) Int. Cl.: H05B 37/02, G07C 9/00

(54) **BELEUCHTUNGSSYSTEM MIT PERSONENBEZOGENER STEUERUNG**
ILLUMINATION SYSTEM WITH PERSONAL CONTROL
SYSTÈME D'ÉCLAIRAGE COMPRENANT UNE COMMANDE PERSONNALISABLE

(30) Priorität: 05.11.2015 DE 102015221746
(43) Veröffentlichungstag der Anmeldung: 10.05.2017
(73) Patentinhaber: Zumtobel Lighting GmbH, 6850 Dornbirn (AT)
(72) Erfinder: Block, Steffen, 6912 Hörbranz (AT); Ebner, Stephan, 6850 Dornbirn (AT); Mayr, Gregor, 6974 Gaißau (AT); Davuluru, Uday Teja, 40239 Düsseldorf (DE)
(74) Vertreter: Rupp, Christian

(56) Entgegenhaltungen:
- EP-A2- 2 846 202
- WO-A1-03/056882
- WO-A1-03/105406
- WO-A1-2010/079388
- WO-A1-2013/001432
- WO-A2-2014/109891
- DE-A1- 10 103 948
- US-A1- 2010 146 278
- US-A1- 2015 296 594
- US-B1- 9 345 103

## Beschreibung

Die Erfindung betrifft ein System bestehend aus einem Biometriesensor und einem Beleuchtungssystem mit zumindest einer Leuchte. Die Erfindung betrifft zudem ein Betriebsgerät, um ein Beleuchtungssystem personenbezogen zu steuern.

Bei modernen Beleuchtungssystemen wird die Beleuchtung heutzutage von einer zentralen Bedienstelle angesteuert. Über diese zentrale Bedienstelle kann eine Vielzahl von Leuchten angesteuert und eingestellt werden. Moderne Beleuchtungssysteme bieten die Möglichkeit, einzelne Leuchten oder Gruppen von Leuchten oder das gesamte Beleuchtungssystem direkt anzusteuern. Dabei kann neben der Helligkeit mittels Dimmbefehlen auch ein programmierter Dimmverlauf, die Farbtemperatur und/oder ein Beleuchtungsszenenkonzept individuell eingestellt werden.

Diese Einstellmöglichkeiten werden allerdings kaum genutzt. Somit wird häufig anstelle einer individualisierten optimierten Beleuchtung und einer damit einhergehend erhöhten Effizienz bzw. einem verbesserten Wohlfühlverhaltens einer Person oft die nachteiligere standardisierte Voreinstellung des Beleuchtungssystems verwendet. Dies bedeutet beispielsweise auch, dass Beleuchtungssysteme unabhängig von einem Tageslichtverlauf betrieben werden, wodurch ein größerer Stromverbrauch die Kosten zum Betreiben des Beleuchtungssystems erhöhen.

Eine Hauptursache für diese Problematik liegt darin, dass über die zentrale Bedienstelle das Beleuchtungssystem nur umständlich in individualisierte Beleuchtungssituationen umgestellt werden kann. So ist beispielsweise in einem Großraumbüro das Einstellen einer konkreten Leuchte nur über ein aufwendiges Ermitteln einer dieser Leuchte zugeordneten Netzwerkadresse möglich, wobei diese Netzwerkadresse dann umständlich in der zentralen Bedienstelle eingestellt werden muss, wobei dazu durch eine Vielzahl von Untermenüs navigiert werden muss.

Ein vereinfachtes Ansteuern eines Beleuchtungssystems ist aus der DE 10 2013 204 479 A1 bekannt. Hier weist ein größeres Beleuchtungssystem eine Vielzahl von Beleuchtungs-Subsystemen auf, die mittels akustischer Signale einer Person einstellbar sind. Insbesondere in Großraumbüros und bei einer entsprechenden Vielzahl von Personen in dem Großraumbüro erscheint ein derart akustisches Steuern des Beleuchtungssystems nachteilig zu sein, da einerseits die Geräuschkulisse in Großraumbüros per se groß ist und damit ein Akustiksensor ggf. Fehldetektionen durchführt oder zwei akustische Steuersignale von unterschiedlichen Personen verschieden sein können.

Ein häufig vernachlässigter, aber wichtiger Faktor in der modernen Arbeitswelt ist die psychologische Balance, die auch Einflüsse auf die körperliche Gesundheit hat. Insbesondere Emotionalität ist auch am Arbeitsplatz ein wichtiger Faktor und wirkt sich nicht zuletzt auch auf die Arbeitsleistung des Mitarbeiters aus. Dabei kann beispielsweise die Lichtfarbe sehr emotional auf eine Biologie des Menschen wirken, vor allem auf die innere Uhr des Menschen. In der DE 20 2011 108 475 U1 wird daher vorgeschlagen, ein multisensorisches System anzuwenden, welches auf eine momentane Emotion einer Person mit entsprechender Einstellung des Beleuchtungssystems reagiert. Beispielsweise kann eine Reaktion auf eine erhaltene E-Mail mittels eines akustischen Sensors erfasst werden und ein Beleuchtungssystem entsprechend adaptiert werden.

Die EP 2 846 202 A2 offenbart ein Verfahren zur Steuerung eines Kommunikationsendgeräts, wobei in dem Verfahren erste und zweite Beleuchtungseinstellungsinformationen in einem Speicher abgespeichert werden. Das Kommunikationsendgerät weist eine Einrichtung zum Erfassen von Benutzeridentifizierungsinformationen auf. Die Einrichtung kann einen Fingerabdruck des Benutzers lesen. Die US 2015/0296594 A1 offenbart eine Leuchtenvorrichtung zur Steuerung eines oder mehrerer Parameter der Lichtabgabe. Eine Spracherkennung kann helfen, einen Nutzer zu identifizieren. Die Spracherkennung kann mit Biometrie zur Anwendung kommen.

Alle diese beschriebenen Steuerungen für Beleuchtungssysteme sind aufgrund der Vielzahl von Sensoren hochgradig komplex und erleichtern nicht zwangsläufig die Steuerung des Beleuchtungssystems.

Es ist somit Aufgabe der hier vorliegenden Erfindung, ein Beleuchtungssystem bereitzustellen, welches in einfacher Weise personenbezogen einstellbar ist. Dabei soll der Aufwand zum Aufbauen und zum Installieren eines derartigen Beleuchtungssystems gering sein. Wichtig ist, dass das Beleuchtungssystem möglichst einfach zu bedienen ist.

Die vorliegende Aufgabe wird mit den in dem unabhängigen Anspruch beschriebenen technischen Maßnahmen gelöst. Vorteilhafte Ausgestaltungen sind in den jeweils abhängigen Patentansprüchen beschrieben.

Diese Aufgabe wird durch ein System, bestehend aus einem Biometriesensor und einem Beleuchtungssystem mit zumindest einer Leuchte gelöst. Dabei ist der Biometriesensor eingerichtet, eine Person mittels einer Fingerabdruck-Erfassung und vorzugsweise einer Gesichtserfassung, bevorzugt einer Augen-Iris-Erfassung, zu identifizieren. Der Biometriesensor ist weiter eingerichtet, das Ergebnis der Identifizierung drahtgebunden oder drahtlos an das Beleuchtungssystem zu übertragen. Das Beleuchtungssystem ist schließlich dazu eingerichtet, in Abhängigkeit von demjenigen Identifizierungsparameter-Satz (siehe unten), der mit den erfassten Identifizierungsparametern übereinstimmt, den zumindest einen personenbezogenen Betriebsparameter des Beleuchtungssystems einzustellen und vorzugsweise einen Administrationsmodus des Beleuchtungssystems freizuschalten.

Mit diesem System wird eine vereinfachte Leuchtensteuerung ermöglicht. Dies erhöht die Bedienerfreundlichkeit und das intuitive Ansteuern des Beleuchtungssystems. Es wird zudem eine höhere Sicherheit gewährleistet, da das Beleuchtungssystem beispielsweise nur durch bereits registrierte Personen individuell einstellbar ist. Auch die Funktionalität des Beleuchtungssystems ist damit erhöht, da die zumeist standardisierte Einstellung sehr einfach variiert werden kann.

Als personenbezogene Betriebsparameter werden nachfolgend beispielsweise die Farbtemperatur, die Helligkeit und/oder eine personalisierte Szeneneinstellung einer Leuchte oder eines Beleuchtungssubsystems oder des gesamten Beleuchtungssystems verstanden. Somit ist das Beleuchtungssystem eingerichtet, nach dem Identifizieren einer Person mittels des Biometriesensors eine individualisierte Beleuchtung einzustellen.

Auf diese Weise kann auch die Aktivierung einer dieser Person zugewiesenen Leuchte in einem Großraumbüro aktiviert werden, es können insbesondere Tageslichtverläufe, Timer oder Uhrzeiteinstellungen für eine spezielle Leuchte oder das Beleuchtungssystem individuell aktiviert werden.

In einer bevorzugten Ausgestaltung ist der Biometriesensor weiter dazu eingerichtet, die Person zu authentifizieren, wobei bei erfolgreicher Authentifizierung der Person der Administrationsmodus des Beleuchtungssystems freigeschaltet wird. Der Administrationsmodus ist insbesondere das Freischalten einer Wartungsfunktion, einer Konfigurationsfunktion und/oder einer Servicefunktion des Beleuchtungssystems. Auf diese Weise können verschiedene Benutzergruppen im Beleuchtungssystem definiert werden, wobei in Abhängigkeit der Authentifizierung der Person eine entsprechende personenbezogene Funktionalität im Beleuchtungssystem freigeschaltet wird. So ist es zum Beispiel möglich, dass ein Hausmeister Zugriff zu allen Beleuchtungseinstellungen des Beleuchtungssystems bekommt und insbesondere auch Notlichteinstellungen oder den Komplettbetrieb durch Aktivieren aller im Beleuchtungssystem integrierten Leuchten ermöglicht. Der Hausmeister ist auch berechtigt, Systemtests oder Wartungstests durchzuführen, die nur nach erfolgter Authentifizierung durch das Beleuchtungssystem freigeschaltet werden. Für Nicht-authentifizierte Personen ist der Administrationsmodus nicht sichtbar und/oder als nicht auswählbar geschaltet. Alternativ kann auch ein entsprechend eines Anstellungsverhältnis klassifizierter Mitarbeiter mehr Funktionalität im Beleuchtungssystem aktivieren oder deaktivieren. So kann ggf. ein festangestellter Mitarbeiter oder ein Bereichsleiter das Betreiben eines Beamers und der damit verbundenen Deaktivierung von zusätzlichen Beleuchtungselementen im Beleuchtungssystem aktivieren während ein Gast oder ein freier Mitarbeiter diese Einstellungen nicht vornehmen kann. Überdies kann auch eine Erweiterbarkeit des Beleuchtungssystems, beispielsweise der Zukauf von aktualisierter oder verbesserter Licht-Applikationen durch die Authentifizierung ermöglicht werden.

Der Biometriesensor erfasst die Identifizierungsparameter von der Person, welche mit abgelegten Identifizierungsparametern (d.h. der erste und zumindest eine zweite Identifizierungsparameter-Satz; siehe unten) verglichen werden, um die Person zu identifizieren. Die abgelegten Identifizierungsparameter sind dabei entweder im Biometriesensor selbst abgespeichert oder diese sind nach dem Übertragen der Identifizierungsparameter an das Beleuchtungssystem mittels der drahtgebundenen oder drahtlosen Kommunikationsschnittstelle zur Identifizierung der Person im Beleuchtungssystem hinterlegt.

Mittels des Biometriesensors wird ein erster Identifizierungsparameter-Satz der Person erfasst, um erste personenbezogene Betriebsparameter des Beleuchtungssystems einzustellen. Mittels des Biometriesensors wird zumindest ein zweiter Identifizierungsparameter-Satz der Person erfasst, um zweite personenbezogene Betriebsparameter des Beleuchtungssystems einzustellen.

Der erste und zumindest eine zweite Identifizierungsparameter-Satz sind verschieden und definieren jeweils, mit welcher Anzahl von Fingern und mit welchem der Finger der Person der jeweilige Identifizierungsparameter-Satz abgelegt ist.

Damit können verschiedene personenbezogene Betriebsparameter des Beleuchtungssystems einer Person zugeordnet werden. So kann beispielsweise durch Erfassen eines Fingerabdrucks an der linken Hand ein von dem Erfassen eines Fingerabdrucks von der rechten Hand unterschiedlicher personenbezogener Betriebsparameter eingestellt werden. So kann beispielsweise mit einem Fingerabdruck an der linken Hand eine Farbtemperatur eingestellt werden und mit dem Fingerabdruck einer rechten Hand die Helligkeit im Beleuchtungssystem variiert werden. Alternativ kann auch ein erster Identifizierungsparameter-Satz der Person mittels eines ersten Biometriesensors erfasst werden, beispielsweise dem Fingerabdruck, und ein zweiter Identifizierungsparameter-Satz mittels eines zweiten Biometriesensors, beispielsweise der Iris-Erfassung, erfolgen. Somit ist das Einstellen der personenbezogenen Betriebsparameter im Beleuchtungssystem nicht auf einen Identifizierungsdatensatz beschränkt, wodurch eine Erhöhung der Funktionalität im Beleuchtungssystem erwirkt wird. Alternativ oder zusätzlich kann auch erfasst werden, ob mittels eines Fingers oder einer Mehrzahl von Finger eine Identifizierung erfolgen soll, wobei anhand der ermittelten Anzahl von Fingern ein entsprechender personenbezogener Betriebsparameter im Beleuchtungssystem einstellbar wird.

Alternativ kann auch anhand des gewählten Identifizierungsparameter-Satzes der Person durch das System erkannt werden, ob die Person lediglich im Beleuchtungssystem identifiziert werden soll, um personenbezogene Betriebsparameter einzustellen oder ob diese Person darüber hinaus auch authentifiziert werden soll, um den Administrationsmodus des Beleuchtungssystems freizuschalten.

Der erste Identifizierungsparameter-Satz und der zumindest eine zweite Identifizierungsparameter-Satz sind entweder im Beleuchtungssystem oder in einem Netzwerkspeicher eines Netzwerks hinterlegbar.

In einer bevorzugten Ausgestaltung werden, falls der erste und zumindest eine zweite Identifizierungsparameter-Satz lokal in einer Speichereinheit abgelegt sind, die erfassten Identifizierungsparameter mit lokal in einem Speicherbereich des Beleuchtungssystems abgelegten Identifizierungsparametern, also mit dem lokal abgelegten ersten und zumindest einen zweiten Identifizierungsparameter-Satz, verglichen. Dazu werden die Identifizierungsparameter vom Biometriesensor an das Beleuchtungssystem übertragen. Eine Auswertung der Identifizierungsparameter und ein Vergleich mit abgelegten Identifizierungsparametern sowie das Verwalten dieser Identifizierungsparameter erfolgt sodann im Beleuchtungssystem selbst und ist unabhängig von einem ggf. im Gebäude befindlichen zweiten Beleuchtungssystem.

Auf diese Weise können die Sensordaten lokal abgelegt werden und eine Übertragung dieser sensiblen Daten wird vermieden, sodass die Sicherheit und die Vertrauenswürdigkeit des Systems vergleichsweise hoch sind.

In einer alternativen Ausgestaltung werden, falls der erste und zumindest eine zweite Identifizierungsparameter-Satz im Netzwerkspeicher hinterlegt sind, die erfassten Identifizierungsparameter mit den im (zentral in einem) Netzwerkspeicher abgelegten Identifizierungsparametern verglichen. Dazu ist der Biometriesensor eingerichtet, die erfassten Identifizierungsparameter an eine Zentralinstanz über ein Netzwerk zu übertragen, wobei in der Zentraleinheit das Vergleichen, Verwalten und Freischalten der personenbezogenen Daten erfolgt. Dieses System verringert zwar die Sicherheit bezogen auf die sensiblen Daten, erhöht aber die Benutzerfreundlichkeit, da nun beispielsweise in einem Gebäude auch in unterschiedlichen Beleuchtungssystemen diese Datensätze vorhanden sind und ein individualisiertes Beleuchtungssystem sofort nach erfolgreicher Identifizierung der Person erhalten wird. Ein aufwendiges Administrieren einer Vielzahl von Beleuchtungssystemen und/oder Aktualisieren durch die Person kann somit unterbleiben.

Bevorzugt sind die personenbezogenen Betriebsparameter im Beleuchtungssystem abgelegt.

In einer bevorzugten Ausgestaltung ist einer identifizierten Person eine individuelle Farbe zugeordnet, welche im Beleuchtungssystem übergreifend einstellbar ist. Somit kann beispielsweise ein eingestellter Besprechungsraum durch das Zuordnen der Farbe zu einer Person bereits erkannt werden. Lädt beispielsweise ein Mitarbeiter zu einer Besprechung ein, so kann dieser Besprechungsraum nach einem erfolgreichen Identifizieren der Person durch diese individualisierte Farbe erleichtert erkannt werden. Alle eingeladenen Personen können anhand der eingestellten Farbe erkennen, welcher Besprechungsraum für die jeweilige Besprechung von der Person gebucht wurde. Auf diese Weise kann das Erkennen eines Besprechungsraums auch mit einer Kalenderfarbe des Termins und einer Besprechungszimmerfarbe abgeglichen werden. Darüber hinaus kann Servicepersonal anhand der individuellen Farbe erkennen, in welchen der Besprechungsräume ein bestellter Service, beispielsweise Erfrischungsgetränke, geliefert werden sollen. Bevorzugt ist ein Servierelement, beispielsweise ein Tablett, an das System angeschlossen. Das Servierelement umfasst ebenfalls ein Leuchtmittel, welches die individualisierte Farbe aussenden kann. Somit wird anhand der individuellen Farbe des Raumes und des Servierelements erleichtert erkannt, wohin der Service geliefert werden sollen. Dies ist insbesondere bei kurzfristigen Raumänderungen oder kurzfristig anberaumten Besprechungen hilfreich.

Ein derartiges individualisiertes Benutzen eines Beleuchtungssystems kann auch zur Auslieferung von Paketen verwendet werden, um beispielsweise einer Flugdrohne eines Paketzustellers einen Ablieferungspunkt zu markieren, so dass die Drohne anhand der individualisierten Farbe erkennt, wo das Paket hin geliefert werden soll und somit der Weg zum Anlieferungspunkt markiert ist. Darüber hinaus kann auch der Besteller erkennen, ob ein Paket angekommen ist, wenn eine entsprechende farbliche Markierung aktiviert wurde.

In einer bevorzugten Ausgestaltung umfasst das Beleuchtungssystem eine Mehrzahl von Beleuchtungs-Subsystemen. Dabei werden die personenbezogenen Betriebsparameter des Beleuchtungssystems eingestellt, welches der identifizierten Person zugeordnet ist. Auf diese Weise erfolgt ein automatisches Aktivieren der relevanten Leuchten in einem Großraumbüro. Anstatt zuerst eine Netzwerkadresse der Leuchte in Erfahrung zu bringen und diese dann mühsam in einem Bedienelement auszuwählen, werden aufgrund der Identifizierung der Person automatisch nur die Leuchten angezeigt, die dem Benutzer zugeordnet sind. Dies wird durch eine Zuordnungstabelle gelöst, in der jeder Person die entsprechende Leuchten zugewiesen sind. Auf diese Weise können flexible Arbeitsplätze eingerichtet werden und für jeden dieser flexiblen Arbeitsbereiche kann eine individualisierte Beleuchtung sehr einfach aktiviert werden. Auf diese Weise wird sowohl die Ansteuerung beschleunigt als auch die Einstellung einer für die Person optimierten Beleuchtung ermöglicht. Dies erhöht die Mitarbeiterzufriedenheit und die Ausnutzung der Funktionen eines Beleuchtungssystems.

Überdies kann mit dem erfindungsgemäßen System ein personalisiertes Szenenkonzept eingestellt werden. Dabei kann eine Szene beispielsweise eine Beleuchtung währen einer Projektor-Präsentation darstellen, während der ein automatisiertes Ausschalten von Leuchten in einem ersten Bereich und ein Dimmen von Leuchten in einem hinteren Bereich eines Besprechungsraums eingestellt wird. Derartige Szeneneinstellungen können nun individualisiert werden und für einen Benutzer angepasst werden. Aufgrund des Biometriesensors kann schnell und einfach auf ein personalisiertes Szenenkonzept umgeschaltet werden.

Der Biometriesensor ist in ein Bedienelement des Beleuchtungssystems integriert. Somit erfolgt das Individualisieren des Beleuchtungssystems direkt beim Aktivieren eines Beleuchtungssystems. Schaltet beispielsweise die Person das Beleuchtungssystem an, erkennt der Biometriesensor automatisch die Identifizierungsparameter-Sätze der jeweiligen Person, um diese drahtlos oder drahtgebunden an das Beleuchtungssystem zu übertragen. Sodann erfolgt ein Vergleich der erfassten Identifizierungsparameter. Das personenbezogene Einstellen von Betriebsparametern im Beleuchtungssystem ist somit ohne zusätzliche Bedienschritte ermöglicht.

In einer bevorzugten Ausgestaltung werden in Abhängigkeit der Betätigung des Bedienelements unterschiedliche Funktionalitäten im Beleuchtungssystem eingestellt. Dabei kann beispielsweise die Dauer einer Betätigung des Bedienelements oder auch der Ort am Bedienelement ausgewertet werden, um unterschiedliche Funktionalitäten zu aktivieren. Somit kann in Abhängigkeit des Status der Beleuchtung des Beleuchtungssystems (An/Aus) und durch Erfassen der Länge der Betätigung beispielsweise ein Dimmen aktiviert werden oder ein Ändern der Farbtemperatur oder eine Änderung der Helligkeit. Auch ein mehrmaliges Aktivieren des Bedienelements kann ausgewertet werden, um beispielsweise verschiedene Szenerien in einem Beleuchtungssystem zu aktivieren.

In einer bevorzugten Ausgestaltung ist das Bedienelement ein Schaltelement für zumindest eine der Leuchten des Beleuchtungssystems. Somit können beispielsweise Stehlampen und aber auch Pendelleuchten in einem Beleuchtungssystem direkt aktiviert werden und gleichzeitig über den Biometriesensor eine personenbezogene Einstellung der Betriebsparameter erfolgen.

Bevorzugt ist das Bedienelement ein Taster mit integriertem Fingerabdrucksensor. Dies ermöglicht einerseits die Identifizierung sowie die Aktivierung des Beleuchtungssystems auf sehr einfache Weise.

In einer alternativen Ausgestaltung ist das Bedienelement ein berührungsempfindlicher Bildschirm mit integriertem Fingerabdrucksensor. Somit können einerseits Grundfunktionen durch Berühren einer Fläche des Bedienelements aktiviert werden, beispielsweise das An- und Ausschalten, und entsprechend der Länge der Berührung auch ein Dimmfaktor eingestellt werden.

Darüber hinaus kann ein Ort der Berührung ausgewertet werden. So kann beispielsweise eine erste Stirnseite einer berührungsempfindlichen Fläche des Bedienelements zum Einstellen der Farbtemperatur und eine alternative Stirnseite zum Einstellen der Helligkeit des Beleuchtungssystems verwendet werden. Zur Vereinfachung können grafische Markierungen am Bedienelement angeordnet sein, um die Bedienfreundlichkeit zu erhöhen. Darüber hinaus kann auch die Anzahl der Finger ermittelt werden, sodass beispielsweise durch das Erkennen des Fingers eine entsprechende personenbezogene Einstellung des Beleuchtungssystems erfolgt. Die Anzahl von Fingern kann beispielsweise auch die Reihenfolge für entsprechende einstellbare Betriebsparameter bedeuten.

In einer bevorzugten Ausgestaltung ist das Bedienelement mittels eines Benutzergeräts fernsteuerbar. Das Benutzergerät ist beispielsweise ein elektronisches Benutzergerät wie ein Mobiltelefon oder ein tragbarer Computer, Laptop oder Tablet-PC. Auf diese Weise können Biometriesensoren des Benutzergeräts verwendet werden, um eine personalisierte Ansteuerung des Beleuchtungssystems zu erwirken. So kann beispielsweise der Home-Button eines Smartphones dazu verwendet werden, die Beleuchtungssysteme personenbezogen einzustellen. Auch die Kamera eines Telefons kann verwendet werden, um die Gesichtserkennung oder die Augen-Iriserkennung durchzuführen.

In einem Beispiel ist der Biometriesensor als separates Element in das System eingebracht. Auf diese Weise müssen bestehende Systeme nicht adaptiert werden, lediglich eine entsprechende Auswertung ist in dem Beleuchtungssystem zu hinterlegen.

In einem weiteren Beispiel ist ein Betriebsgerät für ein Beleuchtungssystem zum Betreiben zumindest einer Leuchte vorgesehen. Das Betriebsgerät umfasst eine Schnittstelle zum Erhalten von Identifizierungsparametern einer Person, eine Steuereinheit zum Einstellen von personenbezogenen Betriebsparametern des Beleuchtungssystems, sodass in Abhängigkeit von einer identifizierten Person zumindest ein personenbezogener Betriebsparameter des Beleuchtungssystems mittels der Steuereinheit eingestellt wird und/oder ein Administrationsmodus des Beleuchtungssystems freigeschaltet wird.

Bevorzugt ist die Schnittstelle drahtgebunden oder drahtlos mit einem Biometriesensor verbunden, um die Identifizierungsparameter der Personen zu erhalten.

In einer bevorzugten Ausgestaltung ist die Schnittstelle mit einer Zentrale verbunden, um die Identifizierungsparameter der Person zu erhalten.

Die Schnittstelle kann beispielsweise die DALI-Schnittstelle zum Betreiben und des Betriebsgeräts und zum Einstellen von Betriebsparametern sein. Alternativ kann auch eine WLAN-, Bluetooth- oder USB-Schnittstelle verwendet werden, um die entsprechenden Identifizierungsparameter der Person bereitzustellen.

In einer bevorzugten Ausgestaltung ist die Steuereinheit eingerichtet, eine Authentifizierung der Person durchzuführen, um den Administrationsmodus des Beleuchtungssystems freizuschalten.

In einer bevorzugten Ausgestaltung ist eine Speichereinheit im Betriebsgerät vorgesehen, in welcher die personenbezogenen Betriebsparameter zu den erfassten Identifizierungsparametern der Person abgelegt sind. In der Speichereinheit können zudem unterschiedliche Beleuchtungsszenen und auch eine Vielzahl von zu einer Person zugehörigen Identifizierungsparameter-Sätze abgelegt sein. Überdies kann auch eine Authentifizierungsinformation hinterlegt sein, sodass bei erfolgreicher Authentifizierung automatisch ein Administrationsmodus ausgewählt werden kann.

In einer bevorzugten Ausgestaltung ist die Steuereinheit eingerichtet, eine Treiberschaltung für das Beleuchtungssystem in Abhängigkeit der benutzerbezogenen Betriebsparameter anzusteuern. Die Treiberschaltung weist beispielsweise einen Wandler, insbesondere einen Hochsetzsteller oder einen Tiefsetzsteller, auf. Bevorzugt ist eine Sekundärversorgungseinheit vorgesehen, um das Beleuchtungssystem in einem Notfall betreiben zu können.

Alternativ oder zusätzlich kann eine Identifizierung einer Person mittels NFC Chip erfolgen. D.h. das Betriebsgerät weist in diesem Fall eine NFC-Schnittstelle auf.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Fig. 1: ein erstes Ausführungsbeispiel eines erfindungsgemäßen Systems.
- Fig. 2: ein zweites Ausführungsbeispiel eines erfindungsgemäßen Systems.
- Fig. 3: ein erstes Ausführungsbeispiel eines erfindungsgemäßen Bedienelements.
- Fig. 4: ein zweites Ausführungsbeispiel eines erfindungsgemäßen Bedienelements.
- Fig. 5: ein drittes Ausführungsbeispiel eines erfindungsgemäßen Bedienelements.
- Fig. 6: ein viertes Ausführungsbeispiel eines erfindungsgemäßen Bedienelements.
- Fig. 7: ein fünftes Ausführungsbeispiel eines erfindungsgemäßen Bedienelements.
- Fig. 8: ein sechstes Ausführungsbeispiel eines erfindungsgemäßen Bedienelements.
- Fig. 9: ein drittes Ausführungsbeispiel eines erfindungsgemäßen Systems.
- Fig. 10: ein Ausführungsbeispiel eines erfindungsgemäßen Betriebsgeräts.
- Tab. 1: eine beispielhafte Zuordnungstabelle für ein erfindungsgemäßes System.

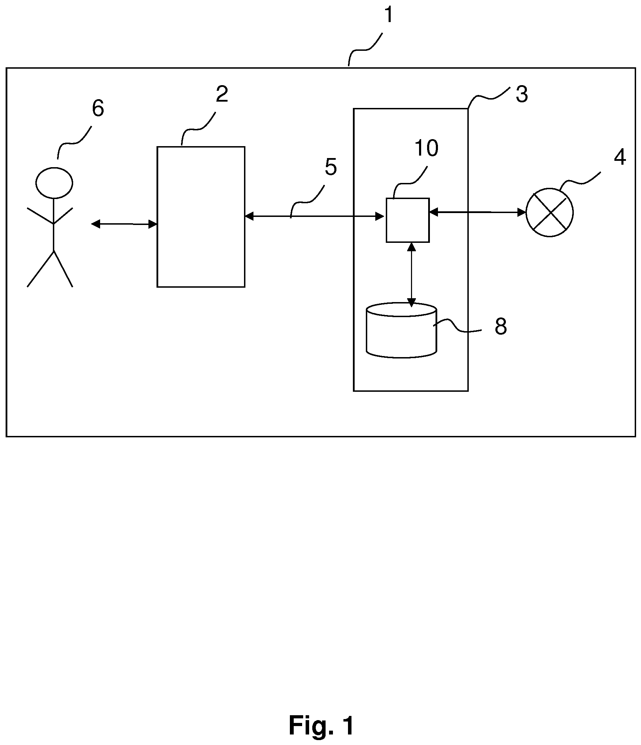

In Fig. 1 ist ein erfindungsgemäßes System 1 dargestellt. Das System 1 weist auf einen Biometriesensor 2 und ein Beleuchtungssystem 3. Das Beleuchtungssystem 3 ist mit dem Biometriesensor 2 über eine Kommunikationsschnittstelle 5 verbunden. Diese Kommunikationsschnittstelle kann drahtlos oder drahtgebunden ausgestaltet sein. Das Beleuchtungssystem 3 ist weiterhin mit zumindest einer Leuchte 4 verbunden.

Erfindungsgemäß ist die Anzahl der Leuchten 4 für ein Beleuchtungssystem 3 nicht beschränkt. Somit kann beispielsweise eine Kaskade von in-Reihe-geschalteter LED als eine Leuchte 4 angesehen werden. Zudem können auch parallel geschaltete Kaskaden von LED als Leuchte 4 angesehen werden. Die Leuchte ist insbesondere ein Leuchtmittel, beispielsweise eine Leuchtdiode.

Der personenbezogene Betriebsparameter ist insbesondere eine Farbtemperatur, eine Helligkeit, ein Tageslichtverlauf, ein Szenenkonzept, eine Timer-Einstellung der Leuchte 4 oder dergleichen.

Soll in dem System 1 ein Benutzer 6 mittels des Biometriesensors 2 identifiziert werden, so wird ein Identifizierungsparameter-Satz über die Schnittstelle 5 an das Beleuchtungssystem 3 übertragen. Im Beleuchtungssystem 3 ist eine Lokalsteuerung 10, beispielsweise eine Steuereinheit 19, vorgesehen, welche die erfassten Identifizierungsparameter der Person 6 mit lokal in einem Speicher 8 des Beleuchtungssystems 3 abgelegten Identifizierungsparametern vergleicht. Ergibt der Vergleich in der Lokalsteuerung 10, eine Übereinstimmung, so werden personenbezogene Betriebsparameter des Beleuchtungssystems 3 eingestellt, mit welchen sodann die Leuchte 4 betrieben wird.

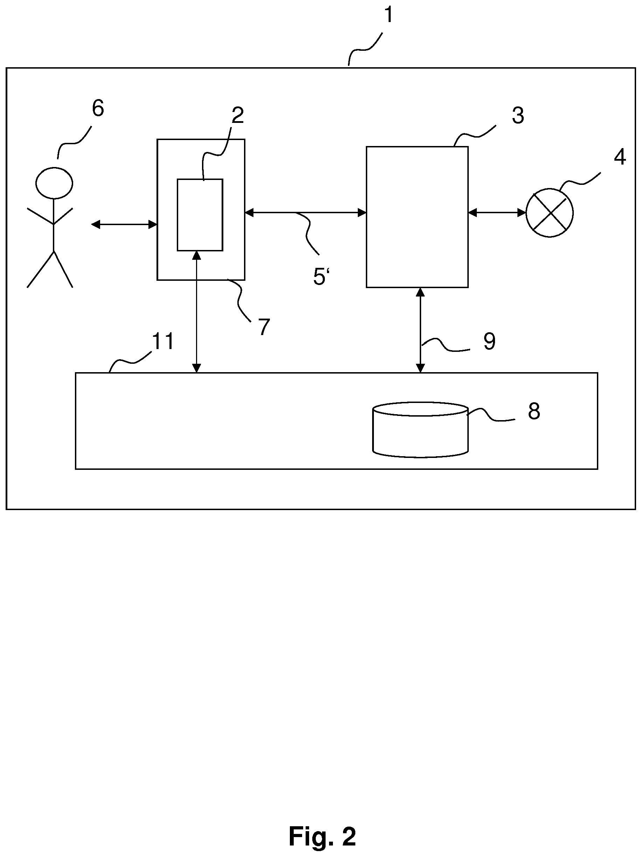

In Fig. 2 ist ein zweites Ausführungsbeispiel eines erfindungsgemäßen Systems 1 dargestellt. Auch hier ist ein Biometriesensor 2 vorgesehen, um Identifizierungsdaten einer Person zu erfassen. Hierbei ist der Biometriesensor 2 in einem Bedienelement 7 eingebracht. Das Einbringen des Biometriesensors 2 in das Bedienelement 7 wird in den nachfolgenden Ausführungsbeispielen näher erläutert. Somit wird das Identifizieren einer Person 6 mittels des Biometriesensors 2 sogleich mit dem Aktivieren eines Beleuchtungssystems 3 durchgeführt. Das Bedienelement 7 kommuniziert nach einer erfassten Aktivierung des Bedienelements 7 über die Schnittstelle 5' mit dem Beleuchtungssystem 3. Im Gegensatz zu Fig. 1 werden die erfassten Identifizierungsdaten an eine Zentralsteuerung 11 übertragen und dort mit einem Speicher 8 abgelegten Identifizierungsparameter verglichen. Somit erfolgen das Verwalten, das Steuern und das Ablegen der Identifizierungsparameter in einer Zentralinstanz 11 und ist losgelöst von dem eigentlichen Beleuchtungssystem 3. Auf diese Weise können unterschiedliche Beleuchtungssysteme 1 mit gleichen Identifizierungsparametern betrieben werden, so dass ein aufwendiges Administrieren dieser Identifizierungsparameter entfallen kann.

Auf diese Weise können alle an der Zentralsteuerung 11 angeschlossenen Beleuchtungssysteme 3 mittels eines Identifizierungsparameter-Satzes personenbezogen eingestellt werden. Eine aufwendige Anpassung jedes einzelnen Beleuchtungssystems an die individualisierten Einstellungen kann dabei entfallen. Dazu ist allerdings jedes Beleuchtungssystem 3 über eine entsprechende Schnittstelle 9 mit der Zentralsteuerung 11 zu verbinden. Dies erfolgt insbesondere über ein Netzwerk 9, beispielsweise ein dem Beleuchtungssystem 3 zugeordnetes Netzwerk, was auch zum Übertragen von Beleuchtungsbefehlen vorgesehen ist, beispielsweise die DALI-Schnittstelle oder über ein in der Gebäudetechnik bereits vorhandenes Netzwerk 9, beispielsweise einer LAN Verbindung.

Mittels den in Fig. 1 und Fig. 2 gezeigten erfindungsgemäßen Systemen können nun unterschiedliche Anwendungen realisiert werden. Zunächst kann mittels der in Fig. 2 dargestellten Kombinationen von Biometriesensor 2 und Bedienelement 7 das Aktivieren des Beleuchtungssystems 3 mit dem Identifizieren der Person 6 verbunden werden. Auf diese Weise kann ein automatisches Anzeigen der relevanten Leuchten 4 an einem Bedienelement 7 erfolgen und/oder sofort die relevante Leuchte 4 eingestellt werden. Anstatt nun zuerst die Leuchtenadresse der Leuchte 4 in Erfahrung zu bringen, um dann diese mühsam in einem Untermenü des Bedienelements 7 zu suchen, werden automatisch nur die relevanten Leuchten 4 angezeigt, die der Person 6 zugeordnet sind. Dies wird über eine Zuordnungstabelle, beispielsweise gemäß der Tab. 1, gelöst, in der für jede Person 6 die entsprechende Leuchte 4 des Beleuchtungssystems 3 zugewiesen wird. Dies ermöglicht insbesondere das Einstellen von flexiblen Arbeitsplätzen, sodass auch ein Wechsel des Arbeitsplatzes innerhalb des Gebäudes kein Neukonfigurieren des Beleuchtungssystems 3 auf den jeweiligen Mitarbeiter bedeutet, sondern durch bloßes Identifizieren der Person 6 eine benutzerbezogene Einstellung des Beleuchtungssystems 3 erfolgen kann.

Wird das Bedienelement 7 aktiviert, erscheinen somit automatisch nur die der Person zugeordnete Leuchten 4, die sofort angesteuert werden. Schalten, Dimmen oder auch Einstellen der Farbtemperatur ist somit individualisiert möglich. Somit kann beispielsweise das in einem Großraumbüro bestehende Problem des Findens der richtigen Leuchte 4 aus einer Vielzahl von Leuchten 4 stark vereinfacht werden.

Insbesondere kann damit auch ein personalisiertes Szenenkonzept realisiert werden. Beispielsweise in kleineren Räumen oder in Besprechungsräumen können Szenenkonzepte nun personalisiert eingestellt werden. Dabei deckt eine Szene eine bestimmte Situation ab, beispielsweise das Einstellen des Beleuchtungssystems 3 für eine Projektor-Präsentation, wobei dabei ein individualisiertes Einstellen des Beleuchtungssystems 3 erfolgt. Dies kann nun personenbezogen individualisiert werden. Ändert eine Person die Konfiguration einer Szene, so ist diese nicht automatisch für alle Personen zugänglich und nur durch entsprechende Identifizierung der Person 6 aufrufbar. Somit können Konfigurationsänderungen von Szenen automatisch benutzerspezifisch abgespeichert werden. So kann beispielsweise für eine Person 1 eine Helligkeit von 500 Lux und eine Farbtemperatur von 6500 K eingestellt werden, während für eine Person 2 die Helligkeit auf 400 Lux und die Farbtemperatur auf 4500 K eingestellt wird.

Mit diesem erfindungsgemäßen System 1 kann auch eine Authentifizierung für verschiedene Benutzerstufen erreicht werden. Somit kann in dem Beleuchtungssystem ein sogenannter Administrationsmodus freigeschaltet werden, wenn eine Person 6 durch das Beleuchtungssystem 3 entsprechend authentifiziert wurde. So können beispielsweise der Tageslichtverlauf, das Einstellen von Timern und/oder die aktuelle Uhrzeit nur durch eine entsprechende Authentifizierung des Benutzers erfolgen. Dies ist im Regelfall ein Administrator der Gebäudetechnik, beispielsweise ein Hausmeister oder eine entsprechende Person, sodass hier eine koordinierte Einstellbarkeit des Beleuchtungssystems 3 gewahrt wird. Damit wird gewährleistet, dass nur autorisierte Servicetechniker das System administrieren können und/oder den Startpunkt von Funktions- oder Betriebsdauertests verändern können. Heutzutage wird dies mit Passwörtern gelöst, was aufgrund der mittels des erfindungsgemäßen Verwendens eines Biometriesensors 2 im System 1 erfolgten Identifizierung und Authentifizierung unterbleiben kann. Das Verfahrend wird somit wesentlich vereinfacht. Nach der Authentifizierung werden automatisch für den jeweiligen Benutzer relevante Menüs freigeschaltet, beispielsweise eine Wartungsfunktion, eine Konfigurationsfunktion oder eine Servicefunktion. Als Servicefunktion ist beispielsweise auch das Bestellen von Lichtapplikationen für ein Beleuchtungssystem 3 vorgesehen, sodass ein entsprechend authentifizierter Benutzer in der Lage ist, eine aktualisierte und/oder verbesserte Lichtmanagement-Anwendung in das Beleuchtungssystem 3 zu laden.

Das Bedienelement 7 ist dabei mit einem Netzwerk 9 verbunden und führt zu einem schnelleren, reibungsloserem Erhalten dieser Lichtmanagement-Applikation.

Durch die in Fig. 1 und Fig. 2 gezeigten Systeme 1 können jeder Person 6 individuelle Farben zugeordnet werden. Diese Farbe kann beispielsweise auch in einem Kalendereintrag hinterlegt sein und für jeden Einladenden sichtbar werden. Die einladende Person 6 betritt sodann einen Besprechungsraum und wird durch das Identifizieren mittels des Biometriesensors 2 erkannt. Dadurch kann zunächst eine Raumbeleuchtung individualisiert eingestellt werden und zudem auch eine Markierung im Besprechungsraum auf diese individualisierte Farbe eingestellt werden. Personen, die zu der Besprechung hinzugeladen wurden, können nun anhand der individuellen Farbmarkierung den jeweiligen Besprechungsraum leicht identifizieren.

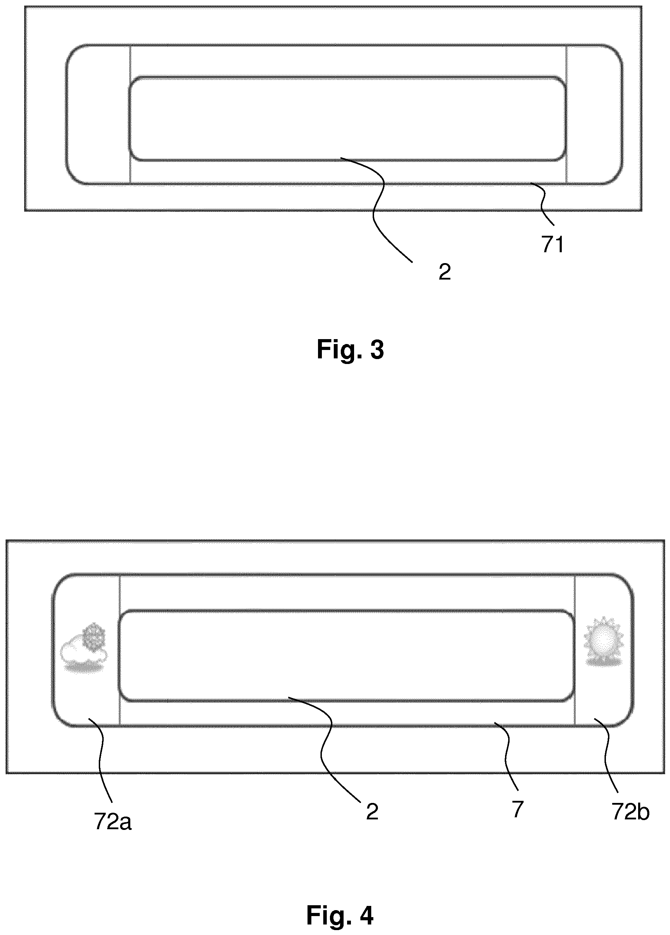

In Fig. 3 ist ein erstes Ausführungsbeispiel eines erfindungsgemäßen Bedienelements 7 dargestellt. Das Bedienelement 7 umfasst einen Biometriesensor 2 unterhalb einer berührungsempfindlichen Fläche 71, beispielsweise einem Touchscreen. Somit kann ein Einschalten oder Ausschalten des Beleuchtungssystems 3 mit dem erfindungsgemäßen Identifizieren und Authentifizieren am Beleuchtungssystem 3 verbunden werden. Es erfolgt somit mit Betätigung des Bedienelements 7 sogleich eine Identifizierung der Person 6. Darüber hinaus können weitere Auswertungen vorgenommen werden. Beispielsweise kann ein langer Tastendruck auf die berührungsempfindliche Fläche 71 bei gleichzeitig ausgeschalteter Leuchte 4 dazu führen, dass die Leuchte 4 hochgedimmt wird. Nach beispielsweise 5 Sekunden Tastendruck wird eine Helligkeit von 100% eingestellt. Alternativ kann bei einem entsprechend langen Tastendruck auf die berührungsempfindliche Fläche 71 und einer eingeschalteten Leuchte 4 ein Herunterdimmen der Leuchte 4 erwirkt werden. Weiterhin kann auch die Anzahl der Tastendrücke zu einem personenbezogenen Einstellen des Beleuchtungssystems 3 führen.

In Fig. 4 ist ein zweites Ausführungsbeispiel eines erfindungsgemäßen Bedienelements 7 dargestellt. Auch hier umfasst das Bedienelement 7 den Biometriesensor 2. Neben der berührungsempfindlichen Fläche 71 sind zudem auch ortsabhängige Funktionen auf der Fläche 71 definiert. Beispielsweise ist an der rechten Stirnseite 72b des Bedienelements 7 das Einstellen eines Warmweiß möglich, wohingegen die Einstellbarkeit eines Kaltweiß anhand der linken Stirnseite 72a des berührungsempfindlichen Sensors 7 erfolgt. Diese Flächen können fixiert sein und mit entsprechenden Markierungen versehen werden, so wie in Fig. 4 dargestellt. Alternativ ist auch eine variable Displayoberfläche möglich, wobei alle Szenen, Farben, Stimmungen und Dimmwerte sowie Einstellungen an definierten Teilen der berührungsempfindlichen Fläche 71 angeordnet sind.

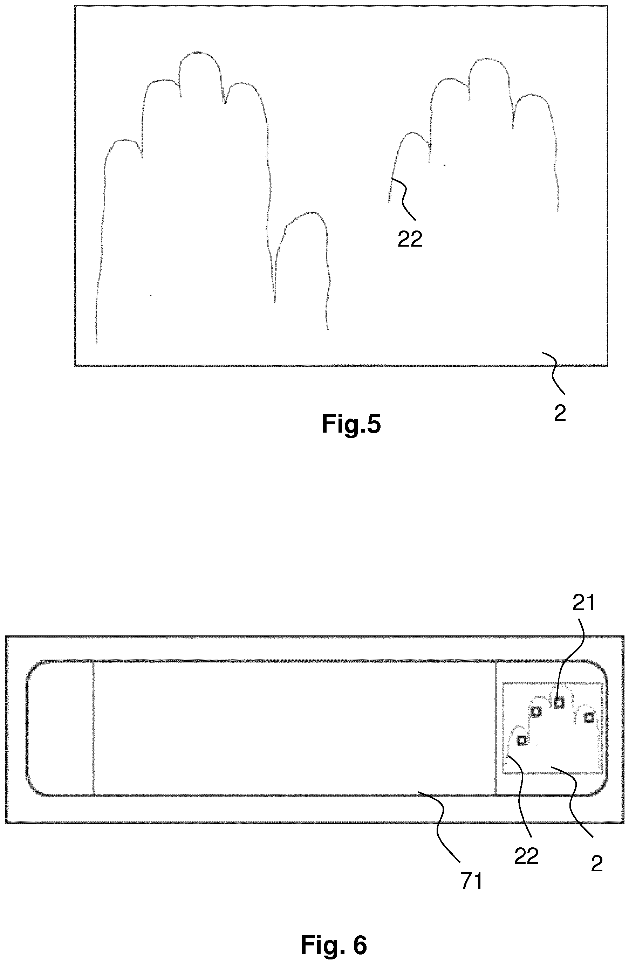

In Fig. 5 ist ein drittes Ausführungsbeispiel eines erfindungsgemäßen Bedienelements 7 dargestellt. Das Bedienelement 7 umfasst wiederum einen Fingerabdrucksensor 23 als Biometriesensor 2. Gemäß Fig. 5 ist eine entsprechende Markierung 22 für das Platzieren der Hand zum Erfassen der Identifizierungsparameter angezeigt. Anhand des Bedienelements 7 erkannt, mit welcher Anzahl und mit welchem der Finger sich der Benutzer 6 am Beleuchtungssystem 3 identifiziert. Somit können verschiedene Identifizierungsparameter-Datensätze zu einer Person 6 abgelegt werden. Somit kann jedem der abgelegten Identifizierungsparameter-Datensätze der Person 6 ein spezieller benutzerbezogener Einstellparameter hinterlegt werden. Wird beispielsweise die linke Hand aufgelegt, so werden Helligkeiten variiert, wird die rechte Hand aufgelegt, wird die Farbtemperatur eingestellt usw. Mit der Reihenfolge der angelegten Finger kann überdies auch die Einstellungsreihenfolge variiert werden, wobei zwischen Szeneneinstellung und Dimmwerten oder anderen Einstellungen gewählt werden kann.

In Fig. 6 wird ein in Fig. 5 gezeigtes Bedienelement 7 in einen Schalter integriert, sodass neben der berührungsempfindlichen Fläche 71 des Bedienelements 7 der Biometriesensor 2 mit der entsprechenden Markierung 22 eingebracht ist. Hierbei ist die Markierung 22 dargestellt. Zudem sind Platzierungshilfen 21 angezeigt, mit denen dem Benutzer 6 ermöglicht wird, die entsprechende Identifizierungsparametrisierung korrekt durchzuführen. Ein vereinfachtes Bedienen ist somit möglich.

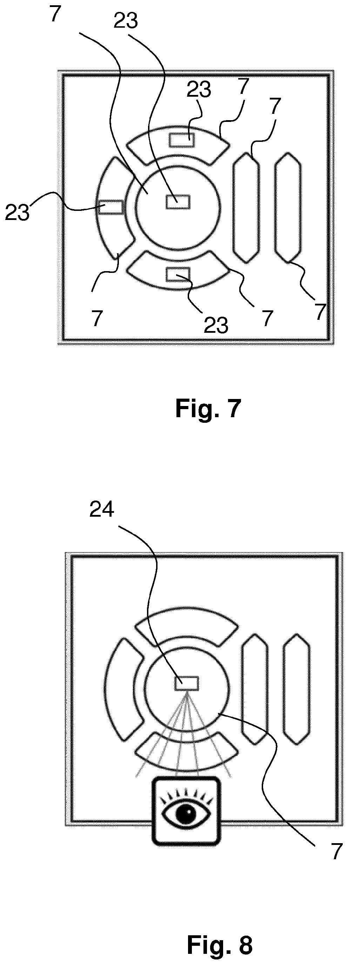

In Fig. 7 ist ein sechstes Ausführungsbeispiel eines erfindungsgemäßen Bedienelements 7 dargestellt. Das Bedienelement 7 weist eine Vielzahl von Bedienschaltern auf, wobei vier der sechs Bedienschalter zusätzlich mit Fingerabdrucksensoren 23 ausgestattet sind. Auf diese Weise kann ein aufwendiges Dimmen und Einstellen des jeweiligen Parameters unterbleiben und die Informationen, welches Bedienelement 7 gedrückt wurde, wird mit dem entsprechenden personenbezogenen Parameter aus dem Beleuchtungssystem 3 kombiniert.

In Fig. 8 ist ein siebtes Ausführungsbeispiel eines erfindungsgemäßen Bedienelements dargestellt. Im Gegensatz zu den vorangegangenen Ausführungsbeispielen für Bedienelemente 7 ist hier ein Iris-Erkennungssensor 24 dargestellt. Der Benutzer stellt sich somit vor, diesen Bedienschalter und zeigt seine Augen-Iris, woraufhin die Person 6 identifiziert wird.

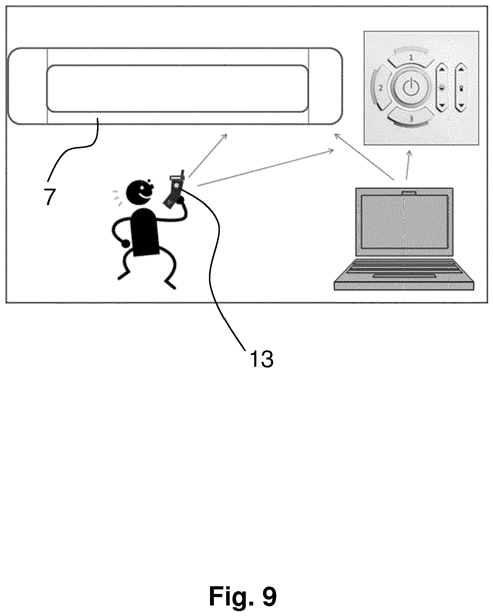

In Fig. 9 ist ein drittes Ausführungsbeispiel eines erfindungsgemäßen Systems 1 dargestellt. Das System 1 umfasst eine Vielzahl von Bedienelementen 7, wobei ein erstes Bedienelement 7' mit einer berührungsempfindlichen Fläche 71 ausgestattet ist. Ein zweites Bedienelement 7" ist entsprechend dem in Fig. 7 dargestellten Ausführungsbeispiel ausgestattet. Anstelle der Integration von Biometriesensoren 2 in die jeweiligen Bedienelemente 7 erfolgt eine Authentifizierung des Benutzers 6 anhand eines Benutzergeräts und einer entsprechenden Fernsteuerung 13. Somit kann der Benutzer mittels eines Biometriesensors im Benutzergerät eine Identifizierung vornehmen am Beleuchtungssystem 3.

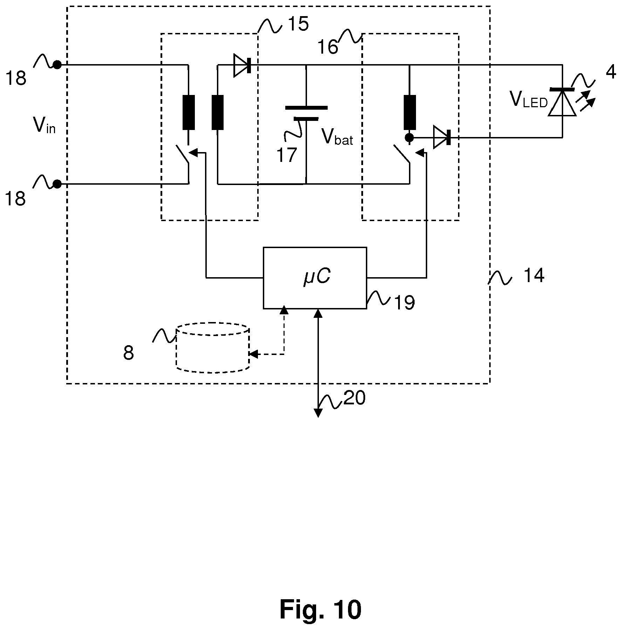

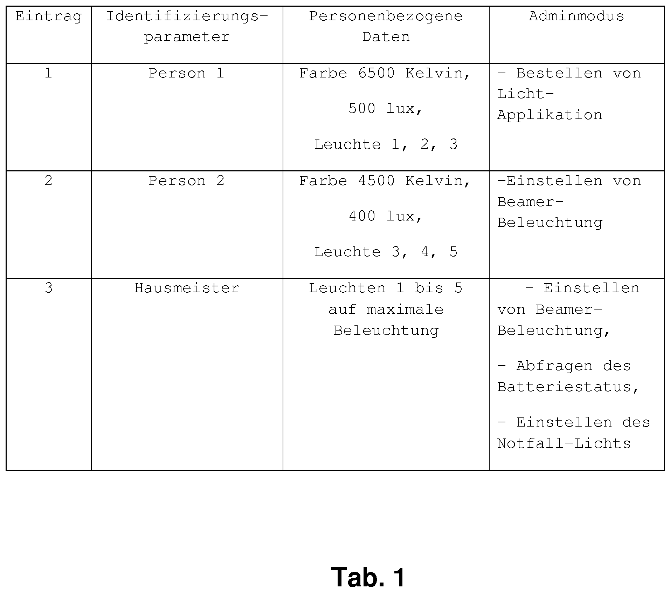

In Fig. 10 ist ein erfindungsgemäßes Betriebsgerät 14 dargestellt. Das Betriebsgerät 14 umfasst eine Primärversorgung mit zwei Anschlüssen 18. Über diese Primärversorgung 18 wird eine Netzspannung V_{IN} in Höhe von 230V an das Betriebsgerät 14 angelegt. Ein Transformator 15 ist vorgesehen, diese Primärversorgung 18 in eine Versorgung umzuwandeln, die eine niedrige Spannung aufweist. Ein Wandler 16 ist vorgesehen, um mittels einer Steuereinheit 19 das Leuchtmittel 4 zu betreiben. Der Wandler 16 ist beispielsweise ein Hochsetzsteller oder ein Tiefsetzsteller.

Erfindungsgemäß ist vorgesehen, dass die Steuereinheit 19 eine Schnittstelle 20 aufweist, über die die Identifizierungsparameter an das Betriebsgerät 14 übertragen werden können. Mittels der Identifizierungsparameter werden in der Steuereinheit 19 personenbezogene Betriebsparameter eingestellt, um die Leuchte 4 individualisiert auf einen Benutzer 6 zu betreiben. Gemäß der Ausgestaltung der Fig. 10 weist das Betriebsgerät 14 eine Speichereinheit 8 auf, mit der die erfassten Identifizierungsparameter mit in dem Speicher 8 abgelegten Identifizierungsparametern abgeglichen werden. Das Verwalten, Steuern oder Vergleichen der Identifizierungsparameter erfolgt somit lokal in dem Betriebsgerät 14.

In Tab. 1 ist eine beispielhafte Zuordnungstabelle für einen Speicher 8 gezeigt. Hierbei sind die Identifizierungsparameter zu personenbezogenen Betriebsparametern und auch zu einer Administrationseinstellung dargestellt. Gemäß einem ersten Eintrag in der Tab. 1 wird eine Person 1 identifiziert und der Person 1 werden die personenbezogenen Betriebsparameter von 500 Lux Helligkeit und einer Farbe von 6500 K zugeordnet. Die Person 1 wird ebenfalls autorisiert zum Bestellen von Lichtapplikationen. Somit wird für jeden Eintrag eine individualisierte Einstellung des Beleuchtungssystems 3 erwirkt und eine benutzerspezifische Administrationseinstellung ermöglicht. Beispielsweise kann der Hausmeister gemäß Eintrag 3 neben dem Abfragen des Batteriestatus auch ein Notfalllicht einstellen und einen Funktionstest durchführen.

In einer alternativen Ausführungsform kann eine Person 6 dadurch erkannt werden, dass die Person 6 über einen NFC (near field communication, Nahfeldkommunikation) Chip identifiziert wird. Dieser NFC Chip kann in einem mobilen Gerät, wie beispielsweise einem smartphone, integriert sein oder in den Körper der Person 6 eingepflanzt werden. Die Identifizierung des NFC Chips bzw. der Person 6 erfolgt in einem Bedienelement 7. In dem Bedienelement 7 kann eine Auslesevorrichtung vorgesehen sein, welche den NFC Chip auslesen kann. Dabei werden vor allem Identifizierungsparameter der Person 6 ausgelesen, um personenbezogene Betriebsparameter des Beleuchtungssystems 3 einzustellen und/oder einen Administrationsmodus des Beleuchtungssystems 3 freizuschalten.

Diese alternative Identifizierung einer Person 6 mittels NFC Chip kann zusätzlich zu der bereits beschriebenen Identifizierung mittels eines Biometriesensors 2 erfolgen.

Zusätzlich kann bei einer Identifizierung der Person 6 über den NFC Chip, eine Steuerung des Beleuchtungssystems 3 über das mobile Gerät erfolgen. Das mobile Gerät kann dabei mit dem Bedienelement 7 und/oder mit dem Beleuchtungssystem 3 über eine drahtlos Kommunikation, wie beispielsweise Bluetooth, WLAN, Infrarot, usw., Steuerbefehle übermitteln. Die Person 6 kann mit dem mobilen Gerät auch den Identifizierungsparameter-Satz der Person 6 und/oder die personenbezogenen Betriebsparameter des Beleuchtungssystems 3 bearbeiten.

Alle gezeigten beschriebenen oder beanspruchten Merkmale können beliebig miteinander kombiniert werden.

### Bezugszeichenliste

1 System
2 Biometriesensor
   21 Platzierungshilfe
   22 Markierung für Identifizierungsparameter
   23 Fingerabdrucksensor
   24 Iriserkennung
3 Beleuchtungssystem
4 Leuchte
5 Kommunikation zwischen Sensor und Beleuchtungssystem
5' Kommunikation zwischen Bedienelement und Beleuchtungssystem
6 Person
7 Bedienelement, Bedienschalter
   71 Berührungsempfindliche Fläche
   72 Ortsabhängige Funktion
8 Speicher
9 Netzwerk
10 Lokalsteuerung
11 Zentralsteuerung
13 Fernsteuerung
14 Betriebsgerät
15 Transformator
16 Wandler
17 Sekundärversorgung
18 Primärversorgung
19 Steuereinheit
20 Schnittstelle

## Patentansprüche

1. System (1) aufweisend ein Bedienelement (7) mit einem in dem Bedienelement (7) integrierten Biometriesensor (2) und ein Beleuchtungssystem (3) mit zumindest einer Leuchte (4), wobei:
• der Biometriesensor (2) eingerichtet ist, eine Person (6) mittels einer Fingerabdruck-Erfassung (23) zu identifizieren;
• der Biometriesensor (2) eingerichtet ist, das Ergebnis der Identifizierung an das Beleuchtungssystem (3) zu übertragen (5);
• der Biometriesensor (2) eingerichtet ist einen ersten Identifizierungsparameter-Satz der Person (6) zu erfassen;
**dadurch gekennzeichnet, dass**:
• der Biometriesensor (2) eingerichtet ist zumindest einen zweiten Identifizerungsparameter-Satz der Person (6) zu erfassen;
• der erste und zumindest eine zweite Identifizierungsparameter-Satz verschieden sind und jeweils definieren, mit welcher Anzahl von Fingern und mit welchem der Finger der Person der jeweilige Identifizierungsparameter-Satz abgelegt ist, und jedem Identifizierungsparameter-Satz zumindest ein personenbezogener Betriebsparameter zugewiesen ist;
• der erste Identifizierungsparameter-Satz und der zumindest eine zweite Identifizierungsparameter-Satz entweder im Beleuchtungssystem (3) oder in einem Netzwerkspeicher eines Netzwerks hinterlegbar sind;
• der Biometriesensor (2) eingerichtet ist Identifizierungsparameter von der Person (6) zu erfassen, und das Beleuchtungssystem (3) dazu eingerichtet ist die erfassten Identifizierungsparameter mit dem ersten und zumindest einem zweiten hinterlegten Identifzierungsparameter-Satz zu vergleichen, um die Person (6) zu identifizieren;
• das Beleuchtungssystem (3) eingerichtet ist, in Abhängigkeit von demjenigen Identifizierungsparameter-Satz, der mit den erfassten Identifizierungsparametern übereinstimmt den zumindest einen personenbezogenen Betriebsparameter des übereinstimmenden Identifizierungsparameter-Satzes einzustellen.

2. System (1) nach Anspruch 1,
wobei, falls der erste und zumindest eine zweite Identifizierungsparameter-Satz lokal in einer Speichereinheit (21) abgelegt sind, die erfassten Identifizierungsparameter mit dem lokal abgelegten ersten und zumindest einem zweiten Identifizierungsparameter-Satz verglichen werden, oder,
falls der erste und zumindest eine zweite Identifizierungsparameter-Satz im Netzwerkspeicher hinterlegt ist, die erfassten Identifizierungsparameter mit den im dem Netzwerkspeicher abgelegten Identifizierungsparametern verglichen werden.

3. System (1) nach einem der vorhergehenden Ansprüche,
wobei einer identifizierten Person eine individuelle Farbe zugeordnet ist, welche beleuchtungssystemübergreifend eingestellt wird.

4. System (1) nach einem der vorhergehenden Ansprüche,
wobei in Abhängigkeit der Betätigung des Bedienelements (7) unterschiedliche Funktionalitäten im Beleuchtungssystem (3) eingestellt werden.

5. System (1) nach Anspruch 4,
wobei das Bedienelement (7) ein Schaltelement für zumindest eine der Leuchten (4) des Beleuchtungssystem (3) ist.

6. System (1) nach einem der Ansprüche 4 oder 5,
wobei das Bedienelement (7) ein Taster mit integriertem Fingerabdrucksensor (23) ist.

7. System (1) nach einem der Ansprüche 4 bis 6,
wobei das Bedienelement (7) ein berührungsempflindlichee Fläche (71), bevorzgugt ein berührungsempfindlicher Bildschirm, mit integriertem Fingerabdrucksensor (23) ist.

8. System (1) nach einem der Ansprüche 4 bis 7,
wobei das Bedienelement (7) mittels eines Benutzergeräts fernsteuerbar (13) ist.

9. System (1) nach einem der vorhergehenden Ansprüche, wobei der Biometriesensor (2) eingerichtet ist, das Ergebnis der Identifizierung drahtgebunden an das Beleuchtungssystem (3) zu übertragen (5).

10. System (1) nach einem der Ansprüche 1 bis 8, wobei der Biometriesensor (2) eingerichtet ist, das Ergebnis der Identifizierung drahtlos an das Beleuchtungssystem (3) zu übertragen (5).

## Claims

1. A system (1) having an operating element (7) with a biometrics sensor (2) integrated into the operating element (7) and a lighting system (3) with at least one luminaire (4), wherein:
• The biometrics sensor (2) is set up to identify a person (6) by means of a fingerprint detection (23);
• the biometrics sensor (2) is set up to transmit (5) the result of the identification to the lighting system (3);
• the biometrics sensor (2) is set up to detect a first identification parameter-set of the person (6);
**characterized in that**:
• the biometrics sensor (2) is set up to detect at least a second identification parameter set of the person (6);
• the first and at least a second identification parameter set are different and in each case define, with which number of fingers and with which of the person's fingers the respective identification parameter set is stored, and at least one personally identifiable operating parameter is assigned to each identification parameter set;
• the first identification parameter set and the at least one second identification parameter set can be stored either in the lighting system (3) or in a network memory of a network;
• the biometrics sensor (2) is set up to detect identification parameters of the person (6), and the lighting system (3) is set up to compare the detected identification parameters with the first and at least a second stored identification parameter set, in order to identify the person (6);
• the lighting system (3) is set up, in dependence on that identification parameter set, which corresponds with the detected identification parameters, to set the at least one personally identifiable operating parameter of the corresponding identification parameter set.

2. A system (1) according to Claim 1,
wherein, if the first and at least one second identification parameter set is stored locally in a memory unit (21), the detected identification parameters are compared with the locally stored first and at least one second identification parameter set, or,
if the first and at least one second identification parameter set is stored in the network memory, the detected identification parameters are compared with the identification parameters stored in the network memory.

3. A system (1) according to any one of the preceding claims,
wherein an individual color is assigned to an identified person, which color is set across the lighting system.

4. A system (1) according to any one of the preceding claims,
wherein depending on the actuation of the operation element (7) different functionalities are set in the lighting system (3).

5. A system (1) according to Claim 4,
wherein the operating element (7) is a switching element for at least one of the luminaires (4) of the lighting system (3).

6. A system (1) according to any one of Claims 4 or 5,
wherein the operating element (7) is a button with integrated fingerprint sensor (23).

7. A system (1) according to any one of Claims 4 to 6,
wherein the operating element (7) is a touch-sensitive surface (71), preferably a touch-sensitive screen, with integrated fingerprint sensor (23).

8. A system (1) according to any one of Claims 4 to 7,
wherein the operating element (7) is remotely controllable (13) by means of a user device.

9. A system (1) according to any one of the preceding claims, wherein the biometrics sensor (2) is set up to transmit (5) the result of the identification by wire to the lighting system (3).

10. A system (1) according to any one of Claims 1 to 8, wherein the biometrics sensor (2) is set up to transmit (5) the result of the identification wirelessly to the lighting system (3)

## Revendications

1. Système (1) comprenant un élément de commande (7) avec un capteur biométrique (2) intégré dans l'élément de commande (7) et un système d'éclairage (3) avec au moins un luminaire (4) :
• le capteur biométrique (2) étant conçu pour identifier une personne (6) au moyen d'un relevé d'empreintes digitales (23) ;
• le capteur biométrique (2) étant conçu pour transmettre (5) le résultat de l'identification au système d'éclairage (3) ;
• le capteur biométrique (2) étant conçu pour relever un premier ensemble de paramètres d'identification de la personne (6) ;
• le premier et au moins un deuxième ensemble de paramètres d'identification de la personne étant différents et définissant chacun avec quel nombre de doigts et avec lequel des doigts de la personne, l'ensemble de paramètres d'identification correspondant est enregistré et à chaque ensemble de paramètres d'identification est attribué au moins un paramètre de fonctionnement spécifique à la personne ;
• le premier ensemble de paramètres d'identification et l'au moins un deuxième ensemble de paramètres d'identification pouvant être enregistrés soit dans le système d'éclairage (3) soit dans une mémoire en réseau d'un réseau ;
• le capteur biométrique (2) étant conçu pour relever des paramètres d'identification de la personne (6) et le système d'éclairage (3) étant conçu pour comparer les paramètres d'identification relevés avec le premier et au moins un deuxième ensemble de paramètres d'identification enregistrés, afin d'identifier la personne (6) ;
• le système d'éclairage (3) étant conçu pour régler, en fonction de l'ensemble de paramètres d'identification qui coïncide avec les paramètres d'identification relevés, l'au moins un paramètre de fonctionnement spécifique à la personne de l'ensemble de paramètres d'identification coïncident.

2. Système (1) selon la revendication 1,
moyennant quoi, si le premier et au moins un deuxième ensemble de paramètres d'identification sont enregistrés localement dans une unité de mémoire (21), les paramètres d'identification relevés sont comparés avec le premier et au moins un deuxième ensemble de paramètres d'identification enregistrés localement ou
si le premier et au moins un deuxième ensemble de paramètres d'identification sont enregistrés dans la mémoire en réseau, les paramètres d'identification relevés sont comparés avec le premier et au moins un deuxième ensemble de paramètres d'identification enregistrés dans la mémoire en réseau.

3. Système (1) selon l'une des revendications précédentes,
une couleur individuelle, réglée quel que soit le système d'éclairage, étant attribuée à une personne identifiée.

4. Système (1) selon l'une des revendications précédentes,
différentes fonctionnalités étant réglées dans le système d'éclairage (3) en fonction de l'actionnement de l'élément de commande (7).

5. Système (1) selon la revendication 4,
l'élément de commande (7) étant un élément de commutation pour au moins un des luminaires (4) du système d'éclairage (3).

6. Système (1) selon l'une des revendications 4 ou 5,
l'élément de commande (7) étant un bouton avec capteur d'empreintes digitales (23) intégré.

7. Système (1) selon l'une des revendications 4 à 6,
l'élément de commande (7) étant une surface tactile (71), de préférence un écran tactile, avec capteur d'empreintes digitales (23) intégré.

8. Système (1) selon l'une des revendications 4 à 7,
l'élément de commande (7) pouvant être commandé à distance au moyen d'un dispositif utilisateur (13).

9. Système (1) selon l'une des revendications précédentes, le capteur biométrique (2) étant conçu pour transmettre (5) le résultat de l'identification de manière filaire au système d'éclairage (3).

10. Système (1) selon l'une des revendications 1 à 8, le capteur biométrique (2) étant conçu pour transmettre (5) le résultat de l'identification sans fil au système d'éclairage (3).
